# EUROPÄISCHE PATENTANMELDUNG

(11) **EP 1 260 787 A1**
(43) Veröffentlichungstag der Anmeldung: **27.11.2002**
(21) Anmeldenummer: 02009191.4
(22) Anmeldetag: 25.04.2002
(51) Int. Cl.: G01B 7/30

(54) **Winkelaufnehmer mit magnetoresistiven Sensorelementen**

(30) Priorität: 21.05.2001 DE 10124608; 24.08.2001 DE 10140710
(71) Anmelder: Ruf Electronics GmbH, 85635 Höhenkirchen (DE)
(72) Erfinder: Schödlbauer, Dieter, Dr., 81825 München (DE)
(74) Vertreter: von Bülow, Tam, Dr.

(57) **Zusammenfassung**

Der Winkelaufnehmer für die Messung eines Drehwinkels enthält einen ersten Sensor 3a, der einen ersten Drehwinkelmeßbereich (z.B. 180°) aufweist und einen zweiten Sensor (3b), der einen größeren Meßbereich aufweist. Der erste Sensor ist hochgenau und erzeugt ein gut lineares Ausgangssignal, während der zweite Sensor 3b weniger genau und insbesondere ein weniger lineares Ausgangssignal erzeugt. Der zweite Sensor liefert dabei ein Hilfssignal, das lediglich dazu verwendet wird zu bestimmen, in welcher Periode seines Ausgangssignales der erste Sensor 3a liegt. Vorzugsweise ist der erste Sensor ein magneto-resistiver Drehfeldsensor des AMR-Typs (Anisotrop Magneto-Resistive), während der zweite Sensor auf dem GMR-Effekt (Giant Magneto-Resistive) beruht (Fig. 1).

## Beschreibung

Die Erfindung bezieht sich auf einen Winkelaufnehmer mit zwei Sensoren und insbesondere mit zwei magneto-resistiven Sensorelementen gemäß dem Oberbegriff des Patentanspruches 1.

Zur Messung der Drehstellung eines drehbaren Bauteiles, wie z.B. einer Welle, ist es bekannt (DE 195 06 938 A1), zwei miteinander mechanisch gekoppelte Einzelsensoren zu verwenden. Die mechanische Kopplung erfolgt über Zahnräder, wobei sich die Zähnezahl der den beiden Sensoren zugeordneten Zahnräder beispielsweise um eine 1 unterscheidet. Beide Sensoren geben dabei ein periodisches Einzelsignal ab. Als Sensoren können optische, magnetische, kapazitive, induktive oder resistive Sensoren verwendet werden. Die Differenz der Meßwerte beider Sensoren, multipliziert mit der jeweiligen Zähnezahl wird auf die Periodizität der Sensoren normiert und in einer weiteren Differenzbildung der gemessene Winkel bestimmt und überprüft, ob dieser Winkel negativ ist, worauf in diesem Falle die volle Winkelperiode hinzuaddiert wird.

Die DE 196 32 656 A1 beschreibt ein Verfahren und eine Vorrichtung zum berührungslosen Erfassen der Lage oder Drehstellung eines Gegenstandes, der zwei parallele Spuren mit magnetisierten Inkrementen aufweist, wobei die Anzahl der Inkremente pro Spur unterschiedlich ist, vorzugsweise um die Zahl 1. Jeder Spur ist ein Sensor zugeordnet, der je ein sinusförmiges und ein cosinusförmiges Ausgangssignal in Abhängigkeit von der relativen Lage zwischen dem Sensor und dem jeweiligen Inkrement der Spur erzeugt. Die Phasendifferenz der Winkelwerte der Sinussignale beider Spuren ergibt ein lineares Signal, das abschnittsweise jedoch positiv oder negativ ist. Ist dieses Signal negativ, so wird ein konstanter Wert von zwei π zu dem Differenzsignal hinzuaddiert.

Die DE 198 49 554 C1 verwendet zwei Sensoren, von denen der eine nur dazu verwendet wird, die Periodennummer zu bestimmen und diese zum aktuellen Ausgangssignal des anderen Sensors hinzuzuaddieren. Die mechanische Kopplung zweier Sensoren zur Meßbereichserweiterung ist auch aus der EP 0 386 334 und DE 197 47 753 C1 bekannt.

Ein wesentliches Problem der genannten Winkelaufnehmer liegt darin, daß entweder die Meßgenauigkeit des Systems durch die notwendige mechanische Kopplung der Einzelsensoren verschlechtert wird (DE 195 06 938 A1 und DE 198 49 554 C1) oder aber für eine hochauflösende Abtastung von magnetischen Maßstäben in der Praxis oft nur solche Einzelsensoren zur Verfügung stehen, welche für anspruchsvolle Anwendungen zu ungenau sind (DE 196 32 656 A1).

Aufgabe der Erfindung ist es, den Winkelaufnehmer der eingangs genannten Art dahingehend zu verbessern, daß er mit geringerem Aufwand ein genaues Meßergebnis über einen Winkelbereich liefert, der größer ist als der Meßwinkelbereich eines der Sensoren.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, einen genauen Sensor (z.B. einen AMR-Sensor (Anisotrop Magneto-Resistive)) mit limitiertem Meßbereich (180°) und einen zweiten ungenaueren Sensor (z.B. GMR-Sensor (Giant Magneto-Resistive)) mit größerem Meßbereich (360°) zu verwenden, wobei der zweite ungenaue Sensor nur dazu dient, die Periode des ersten Sensors festzustellen.

Prinzipiell erzeugt also der erste Sensor ein mehrdeutiges Meßsignal, während der zweite Sensor ein eindeutiges Meßsignal erzeugt, wenn der volle Meßbereich von 360° oder mehr durchlaufen wird. In der Praxis wird daher der zweite Sensor auch eine geringere Genauigkeit haben als der erste Sensor. Prinzipiell ist es aber auch möglich, daß beide Sensoren mit etwa derselben Meßgenauigkeit arbeiten.

Bei magneto-resistiven Drehfeldsensoren, die z.B. auf dem AMR-Effekt (Anisotrop Magneto-Resistive) oder dem GMR-Effekt (Giant Magneto-Resistive) beruhen, wird die Feldrichtungsempfindlichkeit in der Ebene des Sensorelementes ausgenutzt, d.h. es wird die Tangential-Komponente des Magnetfeldes registriert (vgl. z.B. die Druckschrift ELSEVIER, Sensors and Actuators A 91 2001) 2-6; außerdem C.P.O. Treutler, "Magnetic sensors for automotive applications"). Als Steuermagnete kommen vielfach einfache Blockmagnete oder diametral aufmagnetisierte Scheibenmagnete zum Einsatz, welche gegenüber dem Sensorelement drehbar gelagert sind und hierdurch am Meßort ein Magnetfeld mit veränderlicher Richtung hervorrufen. Es ist eine Eigenschaft des AMR-Effektes, daß hierbei nur die Ausrichtung, nicht aber das Vorzeichen des Magnetfeldes erkannt wird. Als Folge hiervon weist das Ausgangssignal des AMR-Winkelsensors ohne zusätzliche Hilfseinrichtungen eine Periode von 180° auf, d.h. eine Meßeindeutigkeit ist nur über eine halbe Umdrehung des Steuermagneten gegeben. Im Gegensatz hierzu läßt sich mit speziellen GMR-Winkelsensoren zwar eine Signalperiode über eine volle Umdrehung erzielen. Im Vergleich zu einer Drehfeldsonde auf AMR-Technologie muß dabei allerdings nach dem derzeitigen technischen Stand eine schlechtere Meßgenauigkeit in Kauf genommen werden. Mit der Erfindung hingegen steht die Meßgenauigkeit eines AMR-Winkelsensors über einen erweiterten Meßbereich und damit insbesondere auch über die vollen 360° zur Verfügung.

Nach einem Ausführungsbeispiel der Erfindung ist der erste Sensor ein AMR-Winkelsensor und der zweite ein GMR-Winkelsensor. Der zweite Sensor stellt für sich allein genommen zwar bereits einen Winkelgeber für 360° dar. An seine Meßgenauigkeit werden aber vergleichsweise nur sehr geringe Ansprüche gestellt. Der zweite Winkelsensor kann mit unterschiedlichsten Technologien realisiert werden. Denkbar ist beispielsweise eine kreisbahnförmige, potentiometrische Widerstandsschicht, die sich nahezu über einen vollen Umlauf erstreckt und mit einem Schleiferabgriff die ausreichende Winkelinformation liefert. Vorzugsweise ist der zweite Winkelgeber aber ebenfalls eine berührungslos arbeitende Feldrichtungssonde, so daß der verwendete Permanentmagnet beide Sensoren ansteuern kann. Hierfür bietet sich der Einsatz des genannten GMR-Winkelsensors an.

Auch wenn im folgenden Ausführungsbeispiel der AMR-Sensor in einer getriebelosen Variante nur zwei Perioden im Meßbereich 360° aufweist, so sei hervorgehoben, daß das Prinzip der Erfindung auf eine Periodenzahl größer als 2 erweitert werden kann, indem beispielsweise der AMR-Sensor mit einem Übersetzungsgetriebe versehen wird. Der Vorteil einer solchen Anordnung ist eine gesteigerte Auflösung beim Nutzsignal. Haben beispielsweise die Zahnräder ein Übersetzungsverhältnis von 1:2, so durchläuft der genaue Sensor (AMR-Sensor) vier Perioden seines Ausgangssignals, während der andere Sensor nur eine Periode durchläuft.

Im folgenden wird die Erfindung anhand eines Ausführungsbeispieles im Zusammenhang mit der Zeichnung ausführlicher erläutert. Es zeigt:
- Fig. 1: eine Prinzipskizze des Sensors nach der Erfindung;
- Fig. 2: den Phasenwinkel der beiden Sensorsignale in Abhängigkeit vom mechanischen Drehwinkel in Grad; und
- Fig. 3: ein Diagramm des Ausgangssignals des gesamten Winkelaufnehmers in Abhängigkeit vom mechanischen Drehwinkel sowie des "Hilfssignals" des zweiten Sensors.

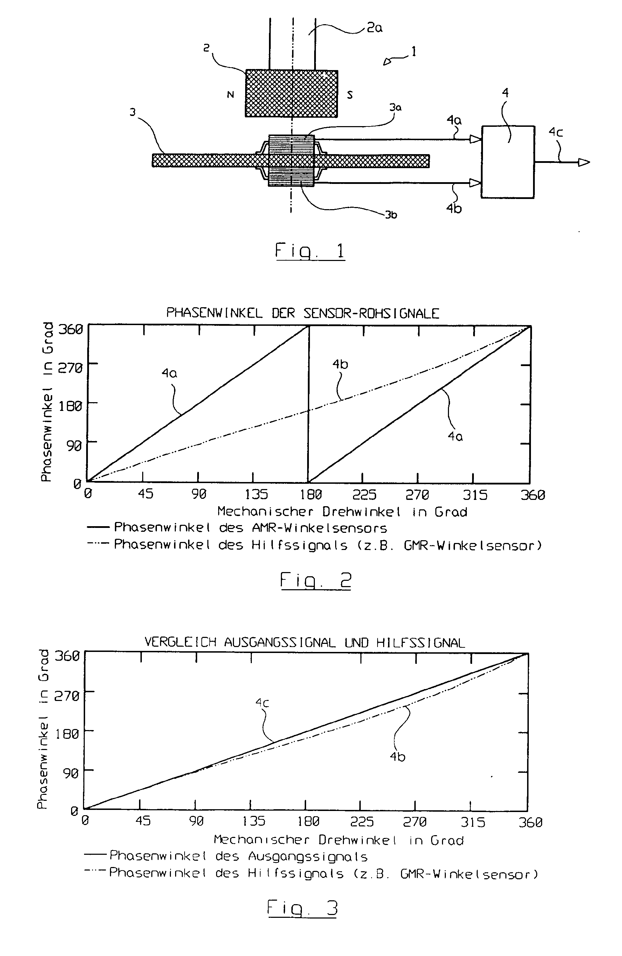

Zunächst sei auf Fig. 1 Bezug genommen. Der Winkelaufnehmer 1 hat einen Permanentmagneten 2 mit Nordpol N und Südpol S, welcher mit einer drehbaren Welle 2a verbunden ist. Gegenüberliegend dem Magnet 2 ist eine Sensorplatine 3 angeordnet, wobei diese so ausgerichtet ist, daß ihre Fläche senkrecht zur Mittelachse der Welle 2a und des Magneten 2 hinweist. Auf der Sensorplatine 3 sind beidseitig jeweils ein Winkelsensor 3a und 3b angebracht. Die Lage der beiden Sensoren 3a und 3b ist so gewählt, daß diese mit ihren Zentren jeweils mit der Drehachse der Welle 2a fluchten.

Der erste Sensor 3a ist ein hochgenauer Sensor, beispielsweise ein "AMR-Sensor" mit einem Ausgangssignal, das eine erste Periode aufweist, hier eine Periode von 180°. Der zweite Sensor 3b ist ein demgegenüber ungenauerer Sensor, beispielsweise ein GMR-Sensor, dessen Ausgangssignal eine zweite Periode, hier 360° aufweist, die also größer und insbesondere ein ganzzahliges Vielfaches der Periode des ersten Sensors 3a ist.

Beide Sensoren 3a und 3b sind mit einer Auswerteelektronik 4 verbunden, die hier zwei Eingänge 4a und 4b und einen Ausgang 4c hat.

Fig. 2 zeigt ein Diagramm der Ausgangssignale der beiden Sensoren. Die durchgezogene Linie ist das am Eingang 4a erscheinende Ausgangssignal des ersten Sensors 3a, das hier als streng linear und hochgenau dargestellt ist und eine Periode von 180° hat. Das zweite, gestrichelt dargestellte Signal ist das Signal des Sensors 3b am Eingang 4b, das demgegenüber ungenauer ist und zwar im wesentlichen monoton ansteigt, aber eine deutliche Nichtlinearität hat. Dafür geht es aber über den vollen Meßbereich von 360°. Anhand dieses Signales läßt sich auch bei größeren Ungenauigkeiten doch ohne weiteres feststellen, ob sich das Ausgangssignal des ersten Sensors 3a in der ersten Periode von 0 bis 180° oder der zweiten Periode von 180 bis 360° befindet. Hierzu kann beispielsweise das Ausgangssignal des zweiten Sensors 3b mit einem voreingestellten Grenzwert verglichen werden, beispielsweise über einen Schwellwertschalter laufen. Ist das Signal größer als der eingestellte Schwellwert, so wird dem Ausgangssignal des ersten Sensors 3a der Wert von 180° hinzuaddiert. Um auch im Grenzbereich nahe 180° die Genauigkeit zu erhalten, wird für die Entscheidung, ob 180° hinzuaddiert werden oder nicht, auch das Signal des ersten Sensors 3a ausgewertet. Dabei wird in einem ersten Schritt zum Ausgangssignal des ersten Sensors 3a der Zahlenwert nx180° hinzuaddiert und das Ergebnis mit dem auf den gleichen Wertebereich normierten Signal des zweiten Sensors 3b verglichen. Bei einer zu großen Abweichung wird dann in einem zweiten Schritt die ganze Zahl n entsprechend korrigiert. Im weiteren Verlauf genügt dann wieder ein einfacher Komparator, der feststellt, ob das Ausgangssignal des zweiten Sensors größer als 180° + x ist. In diesem Fall wird dem Ausgangssignal des ersten Sensors 3a stets 180° hinzuaddiert.

Fig. 3 zeigt als durchgezogene Linie das Ausgangssignal am Ausgang 4c und im Vergleich dazu das ungenaue, nicht lineare Ausgangssignal des zweiten Sensors 3b, das hier als "Hilfssignal" bezeichnet ist. Der Zugewinn an Meßgenauigkeit ist hier deutlich zu erkennen.

## Patentansprüche

1. Winkelaufnehmer mit zwei Sensoren, die je ein periodisches Ausgangssignal erzeugen, wobei die Ausgangssignale der beiden Sensoren im Meßbereich eine unterschiedliche Anzahl von Perioden aufweisen, **dadurch gekennzeichnet, daß** der erste Sensor (3a) ein hochgenauer Sensor ist, der im Meßbereich eine größere Anzahl von Perioden seines Ausgangssignals erzeugt als der zweite Sensor (3b),
daß der zweite Sensor (3b) weniger genau als der erste Sensor sein kann und im Meßbereich ein eindeutiges geringeres Ausgangssignal mit nur einer Signalperiode erzeugt und
daß das Ausgangssignal des zweiten Sensors (3b) zur Bestimmung der momentanen Periodenzahl des ersten Sensors (3a) ausgewertet wird.

2. Winkelaufnehmer nach Anspruch 1, **dadurch gekennzeichnet,**
**daß** der erste Sensor (3a) ein magneto-resistiver Drehfeldsensor ist, der auf dem Effekt anisotroper magneto-resistiver Elemente beruht und durch Auswertung der Feldrichtungsempfindlichkeit in der Ebene eine Periodizität von 180° aufweist.

3. Winkelaufnehmer nach Anspruch 2, **dadurch gekennzeichnet,**
**daß** der zweite Sensor (3b) ein magneto-resistiver Drehfeldsensor ist, der auf dem GMR-Effekt (giant magneto-resistive) beruht und einen Meßbereich von 360° aufweist.

4. Winkelaufnehmer nach einem der Ansprüche 1 bis 3, **dadurch gekennzeichnet,**
**daß** mindestens einer der Sensoren (3a, 3b) mittels eines Zahnrades an ein Bauteil (2a) gekoppelt ist, dessen Winkelstellung zu messen ist, wobei das Übersetzungsverhältnis des Zahnrades so gewählt ist, daß die beiden Sensoren mit unterschiedlichem Übersetzungsverhältnis gedreht werden.

5. Winkelaufnehmer nach einem der Ansprüche 2 bis 4, **dadurch gekennzeichnet,**
**daß** ein Steuermagnet (2) mit dem Bauteil (2a), dessen Drehstellung gemessen werden soll, verbunden ist, wobei der Steuermagnet (2) ein Magnetfeld erzeugt, das relativ zu mindestens einem der Sensoren (3a, 3b) in Abhängigkeit von der Drehstellung ein Magnetfeld mit veränderlicher Richtung erzeugt.

6. Winkelaufnehmer nach den Ansprüchen 2 und 3, **dadurch gekennzeichnet,**
**daß** beide Sensoren (3a, 3b) auf einer gemeinsamen Platine (3) befestigt sind und zwar so, daß ihre Zentren jeweils mit der Drehachse des Bauteils (2a) fluchten und daß die Drehachse des Bauteils (2a) senkrecht auf der Platine steht.
